# EUROPEAN PATENT APPLICATION

(11) **EP 4 813 684 A1**
(43) Date of publication of application: **30.09.2026**
(21) Application number: 24895625.2
(22) Date of filing: 01.07.2024
(51) Int. Cl.: B60K 1/04, H01M 50/244, B62D 25/20

(54) **VEHICLE BODY AND VEHICLE**

(30) Priority: 30.11.2023 CN 202311633490
(71) Applicant: Contemporary Amperex Intelligence Technology (Shanghai) Limited, Shanghai 201306 (CN)
(72) Inventor: ZHANG, Yahui, Shanghai 201306 (CN); ZHANG, Xiaoping, Shanghai 201306 (CN); LU, Yicheng, Shanghai 201306 (CN)
(74) Representative: Gong, Jinping
(86) International application number: PCT/CN2024/102820
(87) International publication number: WO 2025/112522

(57) **Abstract**

A vehicle body (1000) and a vehicle are provided. The vehicle body (1000) includes a main frame (100), a battery (200), a floor panel (300), a first sealing member (400), and a second sealing member (500). The battery (200) includes an outer frame (210), where the outer frame (210) has an accommodating cavity (211) configured to accommodate a battery cell. The floor panel (300) covers the outer frame (210), where a portion of the floor panel (300) cooperates with the outer frame (210) to clamp the first sealing member (400) to form a first sealing interface (410), and another portion of the floor panel (300) cooperates with the outer frame (210) to clamp the second sealing member (500) to form a second sealing interface (510). The first sealing interface (410) and the second sealing interface (510) are disposed at an angle to each other. In this way, the risk of sealing failure between the outer frame (210) and the floor panel (300) caused by vibration of the vehicle body (1000) can be effectively reduced, thereby improving the sealing performance of the battery (200).

## Description

### CROSS-REFERENCE TO RELATED APPLICATIONS

This application claims priority to Chinese Patent Application No. 202311633490.4, filed on November 30, 2023 and entitled "VEHICLE BODY AND VEHICLE", which is incorporated herein by reference in its entirety.

### TECHNICAL FIELD

This application pertains to the field of automobile technology, and more specifically, relates to a vehicle body and a vehicle.

### BACKGROUND

With the rapid development of new energy technology, electric vehicles have gained increasing popularity among people. An electric vehicle includes a vehicle body, and the vehicle body includes a main frame and a battery. To improve the structural strength of the vehicle body and the energy density of the battery, the main frame and the battery are typically designed as an integral structure. However, this design may result in degraded sealing performance of the battery, which is not conducive to improving the safety performance of the electric vehicle.

### SUMMARY

One of the objectives of embodiments of this application is to provide a vehicle body and a vehicle, so as to solve the technical problem of poor sealing performance of a battery of a vehicle in the related art.

To achieve the above objective, the technical solutions adopted in the embodiments of this application are to provide a vehicle body, including:
a main frame;
a battery, including a battery cell and an outer frame mounted on the main frame, where the outer frame has an accommodating cavity configured to accommodate the battery cell;
a floor panel covering the outer frame to seal the accommodating cavity;
a first sealing member annularly disposed around the accommodating cavity, where a portion of the floor panel cooperates with the outer frame to clamp the first sealing member to form a first sealing interface; and
a second sealing member annularly disposed around the accommodating cavity, where another portion of the floor panel cooperates with the outer frame to clamp the second sealing member to form a second sealing interface;
where the first sealing interface and the second sealing interface are disposed at an angle to each other.

The vehicle body provided in the embodiment of this application has at least the following beneficial effects: In the vehicle body provided in the embodiment of this application, a portion of the floor panel cooperates with the outer frame to clamp the first sealing member to form the first sealing interface, another portion of the floor panel cooperates with the outer frame to clamp the second sealing member to form the second sealing interface, and the first sealing interface and the second sealing interface are disposed at an angle to each other, that is, a sealing direction of the first sealing interface is different from a sealing direction of the second sealing interface. In this way, in a case that the vehicle body vibrates along a direction perpendicular to the first sealing interface, the gap between the outer frame and the floor panel can be sealed relying on the second sealing member; in a case that the vehicle body vibrates along a direction perpendicular to the second sealing interface, the gap between the outer frame and the floor panel can be sealed relying on the first sealing member. This effectively reduces the risk of sealing failure between the outer frame and the floor panel caused by vibration of the vehicle body, thereby effectively improving the sealing performance of the battery.

In some embodiments of this application, the floor panel includes a plate body covering the outer frame and a bent portion annularly disposed around the plate body, where the outer frame has a first pressing surface and a second pressing surface disposed at an angle to each other, the plate body cooperates with the first pressing surface to clamp the first sealing member to form the first sealing interface, and the bent portion cooperates with the second pressing surface to clamp the second sealing member to form the second sealing interface.

With the above technical solution, it is convenient to form the first sealing interface and the second sealing interface between the outer frame and the floor panel.

In some embodiments of this application, the first pressing surface is perpendicular to a height direction of the vehicle body.

The above technical solution not only facilitates the assembly of the outer frame and the floor panel, but also makes it easier to control the compression amount of the first sealing member. In a case that the vehicle body does not vibrate along the height direction, the first sealing member can effectively seal the gap between the outer frame and the plate body, effectively improving the sealing performance of the battery. In a case that the vehicle body vibrates along the height direction, the gap between the outer frame and the floor panel can be sealed relying on the second sealing member, effectively reducing the risk of sealing failure between the outer frame and the floor panel caused by vibration of the vehicle body, thereby further improving the sealing performance of the battery.

In some embodiments of this application, the angle formed by the first pressing surface and the second pressing surface is an obtuse angle.

With the above technical solution, it is convenient to place the floor panel over the outer frame and make the bent portion cooperate with the second pressing surface to clamp the second sealing member.

In some embodiments of this application, the angle formed by the first pressing surface and the second pressing surface is 95°-120°.

The above technical solution not only facilitates placement of the floor panel over the outer frame, but also mitigates the change in the compression amount of the second sealing member in a case that the vehicle body vibrates along the height direction, thereby reducing the risk of sealing failure between the outer frame and the floor panel caused by vibration of the vehicle body.

In some embodiments of this application, the angle formed by the first pressing surface and the second pressing surface is a right angle.

With the above technical solution, in a case that the vehicle body vibrates along the height direction, the compression amount of the first sealing member changes significantly, while the compression amount of the second sealing member hardly changes. Therefore, the gap between the outer frame and the floor panel can be sealed relying on the second sealing member. In a case that the vehicle body vibrates along a direction perpendicular to its height direction, the compression amount of the second sealing member changes significantly, while the compression amount of the first sealing member hardly changes. Therefore, the gap between the outer frame and the floor panel can be sealed relying on the first sealing member. This effectively reduces the risk of sealing failure between the outer frame and the floor panel caused by vibration of the vehicle body, thereby effectively improving the sealing performance of the battery.

In some embodiments of this application, the plate body has a third pressing surface disposed opposite the first pressing surface, where the third pressing surface is parallel to the first pressing surface and cooperates with the first pressing surface to clamp the first sealing member; and/or the bent portion has a fourth pressing surface disposed opposite the second pressing surface, where the fourth pressing surface is parallel to the second pressing surface and cooperates with the second pressing surface to clamp the second sealing member.

The above technical solution effectively increases the pressing force acting on the first sealing member by the plate body and the outer frame together and the pressing force acting on the second sealing member by the bent portion and the outer frame together, thereby effectively increasing the compression amount of the first sealing member and the compression amount of the second sealing member. This further reduces the risk of sealing failure between the outer frame and the floor panel caused by vibration of the vehicle body, thereby further improving the sealing performance of the battery.

In some embodiments of this application, the floor panel further includes a first connecting portion, where the first connecting portion is connected between the plate body and the main frame.

With the above technical solution, under the supporting action of the main frame, the pressing force acting on the first sealing member by the plate body is effectively increased, thereby effectively increasing the compression amount of the first sealing member. This further reduces the risk of sealing failure between the outer frame and the floor panel caused by vibration of the vehicle body, thereby further improving the sealing performance of the battery.

In some embodiments of this application, the first connecting portion is annularly disposed around the plate body, where an inner annular side of the first connecting portion is connected to the plate body, and an outer annular side of the first connecting portion is connected to the main frame.

With the above technical solution, the gap between the plate body and the main frame is effectively sealed, thereby effectively isolating the accommodating cavity of the outer frame from the external environment of the main frame. This further improves the sealing performance of the battery.

In some embodiments of this application, the floor panel further includes a second connecting portion, where the second connecting portion is connected between the bent portion and the main frame.

With the above technical solution, under the supporting action of the main frame, the pressing force acting on the second sealing member by the bent portion is effectively increased, thereby effectively increasing the compression amount of the second sealing member. This further reduces the risk of sealing failure between the outer frame and the floor panel caused by vibration of the vehicle body, thereby further improving the sealing performance of the battery.

In some embodiments of this application, the second connecting portion is annularly disposed around the bent portion, where an inner annular side of the second connecting portion is connected to the bent portion, and an outer annular side of the second connecting portion is connected to the main frame.

With the above technical solution, the gap between the bent portion and the main frame is effectively sealed, thereby effectively isolating the accommodating cavity of the outer frame from the external environment of the outer frame. This further improves the sealing performance of the battery.

In some embodiments of this application, the first sealing member is disposed on a top of the outer frame; and/or the second sealing member is disposed on a side of the outer frame facing away from the accommodating cavity.

With the above technical solution, the sealing structure between the outer frame and the floor panel does not need to occupy the internal space of the accommodating cavity of the outer frame, effectively improving the space utilization of the accommodating cavity of the outer frame. This effectively improves the volumetric energy density of the battery.

In some embodiments of this application, the outer frame or the floor panel is provided with a first limiting groove, where at least a portion of the first sealing member is accommodated in the first limiting groove.

With the above technical solution, the position of the first sealing member is effectively limited, mitigating the displacement of the first sealing member in a case that the vehicle body vibrates. This further reduces the risk of sealing failure between the outer frame and the floor panel caused by vibration of the vehicle body, thereby further improving the sealing performance of the battery.

In some embodiments of this application, the outer frame or the floor panel is provided with a second limiting groove, where at least a portion of the second sealing member is accommodated in the second limiting groove.

With the above technical solution, the position of the second sealing member is effectively limited, mitigating the displacement of the second sealing member in a case that the vehicle body vibrates. This further reduces the risk of sealing failure between the outer frame and the floor panel caused by vibration of the vehicle body, thereby further improving the sealing performance of the battery.

In some embodiments of this application, the vehicle body further includes a third sealing member annularly disposed around the accommodating cavity, where the main frame cooperates with the outer frame to clamp the third sealing member to form a third sealing interface.

With the above technical solution, the gap between the outer frame and the main frame is effectively sealed, thereby effectively isolating the accommodating cavity of the outer frame from the external environment of the main frame. This further improves the sealing performance of the battery.

In some embodiments of this application, the third sealing interface is parallel to the first sealing interface.

With the above technical solution, in a case that the vehicle body vibrates along a direction perpendicular to the first sealing interface, the gap between the outer frame and the floor panel can be sealed relying on the second sealing member. In a case that the vehicle body vibrates along a direction perpendicular to the second sealing interface, the gap between the outer frame and the floor panel can be sealed relying on the first sealing member, and the gap between the outer frame and the main frame can also be sealed relying on the third sealing member. This further reduces the risk of sealing failure between the outer frame and the floor panel and between the outer frame and the main frame caused by vibration of the vehicle body, thereby further improving the sealing performance of the battery.

In some embodiments of this application, the outer frame or the main frame is provided with a third limiting groove, where at least a portion of the third sealing member is accommodated in the third limiting groove.

With the above technical solution, the position of the third sealing member is effectively limited, mitigating the displacement of the third sealing member in a case that the vehicle body vibrates. This effectively reduces the risk of sealing failure between the outer frame and the main frame caused by vibration of the vehicle body, thereby further improving the sealing performance of the battery.

In some embodiments of this application, the outer frame includes a frame body and a mounting seat connected to the frame body, where the frame body is provided with the accommodating cavity, the mounting seat is mounted on the main frame, a portion of the floor panel cooperates with the frame body to clamp the first sealing member to form the first sealing interface, another portion of the floor panel cooperates with the frame body to clamp the second sealing member to form the second sealing interface, and the main frame cooperates with the mounting seat to clamp the third sealing member to form the third sealing interface.

The above technical solution not only facilitates formation of the first sealing interface and the second sealing interface between the outer frame and the floor panel, but also facilitates formation of the third sealing interface between the outer frame and the main frame.

An embodiment of this application further provides a vehicle including the vehicle body according to any one of the foregoing embodiments.

The vehicle provided in the embodiments of this application has at least the following beneficial effects: The vehicle provided in the embodiments of this application adopts the vehicle body according to any one of the foregoing embodiments, effectively improving the safety performance of the vehicle.

### BRIEF DESCRIPTION OF DRAWINGS

To describe the technical solutions in the embodiments of this application more clearly, the following briefly describes the accompanying drawings for describing the embodiments or exemplary techniques. Apparently, the accompanying drawings below show merely some embodiments of this application. Persons of ordinary skill in the art may still derive other related drawings from the accompanying drawings without creative efforts.
FIG. 1 is a schematic structural diagram of a vehicle body according to an embodiment of this application;
FIG. 2 is a schematic bottom view of the vehicle body shown in FIG. 1;
FIG. 3 is a first schematic cross-sectional view of the vehicle body shown in FIG. 2 taken along a direction of line A-A;
FIG. 4 is a schematic enlarged view at position B of the vehicle body shown in FIG. 3;
FIG. 5 is a second schematic cross-sectional view of the vehicle body shown in FIG. 2 taken along a direction of line A-A;
FIG. 6 is a schematic enlarged view of position C of the vehicle body shown in FIG. 5;
FIG. 7 is a third schematic cross-sectional view of the vehicle body shown in FIG. 2 taken along a direction of line A-A; and
FIG. 8 is a schematic enlarged view of position D of the vehicle body shown in FIG. 7.

In the drawings, the reference signs are as follows:
1000. vehicle body;
100. main frame;
200. battery; 210. outer frame; 211. accommodating cavity; 212. first pressing surface; 213. second pressing surface; 214. fifth pressing surface; 215. frame body; 216. mounting seat; 217. first limiting groove; 218. second limiting groove; 219. third limiting groove; 220. protective plate;
300. floor panel; 310. plate body; 311. third pressing surface; 320. bent portion; 321. fourth pressing surface; 330. first connecting portion; 340. second connecting portion;
400. first sealing member; 410. first sealing interface;
500. second sealing member; 510. second sealing interface;
600. third sealing member; 610. third sealing interface;
700. front frame; and
800. rear frame.

### DESCRIPTION OF EMBODIMENTS

To make the objectives, technical solutions, and advantages of this application clearer, the following describes this application in detail with reference to the accompanying drawings and embodiments. It should be understood that the specific embodiments described herein are merely intended to explain this application rather than to limit this application.

It should be noted that when a component is referred to as being "fixed to" or "disposed on" another component, it may be directly on the another component or indirectly on the another component. When a component is referred to as being "connected to" another component, it can be directly or indirectly connected to the another component. The orientations or positional relationships indicated by terms such as "upper", "lower", "left", and "right" are orientations or positional relationships shown in the accompanying drawings, rather than indicating or implying that the means or components mentioned must have specific orientations or must be constructed or manipulated according to particular orientations. These terms shall therefore not be construed as limitations on this application. For those of ordinary skill in the art, the specific meanings of the above terms can be understood according to specific situations. The terms "first", "second", and the like are merely for the purpose of description and shall not be understood as any indication or implication of relative importance or implicit indication of the quantity of technical features. Unless otherwise stated, "a plurality of" means two or more.

In the embodiments of this application, the same reference signs denote the same members. For brevity, in different embodiments, detailed descriptions of the same members are not repeated. It should be understood that as shown in the accompanying drawings, dimensions such as thickness, length, and width of various components in the embodiments of this application are merely for illustrative purposes and should not constitute any limitations on this application.

An electric vehicle refers to a vehicle that relies on electrical energy as a power source for all or some of the working conditions. The electric vehicle includes a vehicle body, where the vehicle body includes a main frame, a battery, and a floor panel. The main frame is a main component of the vehicle body, which plays a role in supporting and reinforcing the entire vehicle body. The battery typically includes a battery cell and an outer frame, where the battery cell is the smallest unit constituting the battery, the outer frame is mounted on the main frame, the outer frame has an accommodating cavity, and the battery cell is accommodated in the accommodating cavity. The floor panel is mounted on the main frame and is configured to provide an installation environment for components disposed in the cockpit of the electric vehicle. The floor panel also serves to support the components as well as the driver and passengers.

In the related art, to improve the structural strength of the vehicle body and the energy density of the battery, the floor panel is typically used as a cover body of the battery to cover the outer frame, so as to seal the accommodating cavity of the outer frame, thereby achieving an integrated design of the vehicle body. Additionally, to improve the sealing performance of the battery, a sealing member is typically provided between the outer frame and the floor panel to seal the gap between the outer frame and the floor panel. However, during the driving process of the electric vehicle, the vehicle body is prone to vibration. In a case that the vibration direction of the vehicle body is the same as or substantially the same as the assembly direction of the outer frame and the floor panel, the outer frame and the floor panel undergo relative movement with the vibration of the vehicle body. This causes significant changes in the compression amount of the sealing member, which easily leads to sealing failure between the outer frame and the floor panel, resulting in a substantial decline in the sealing performance of the battery.

To improve the sealing performance of the battery in the electric vehicle, in the vehicle body provided in the embodiments of this application, a portion of the floor panel cooperates with the outer frame to clamp the first sealing member to form the first sealing interface, another portion of the floor panel cooperates with the outer frame to clamp the second sealing member to form the second sealing interface, and the first sealing interface and the second sealing interface are disposed at an angle to each other, that is, the sealing direction of the first sealing interface is different from the sealing direction of the second sealing interface. In this way, in a case that the vehicle body vibrates along a direction perpendicular to the first sealing interface, the gap between the outer frame and the floor panel can be sealed relying on the second sealing member; in a case that the vehicle body vibrates along a direction perpendicular to the second sealing interface, the gap between the outer frame and the floor panel can be sealed relying on the first sealing member. This effectively reduces the risk of sealing failure between the outer frame and the floor panel caused by vibration of the vehicle body, thereby effectively improving the sealing performance of the battery.

The vehicle disclosed in the embodiments of this application may be a fuel vehicle, a gas vehicle, or a new energy vehicle, where the new energy vehicle may be a battery electric vehicle, a hybrid vehicle, an extended-range vehicle, or the like. The vehicle includes a vehicle body. The vehicle body is a main supporting component of the vehicle. In some embodiments, the vehicle body may be an integrated vehicle body. The vehicle body has an engine compartment and a passenger compartment, where the engine compartment is configured to accommodate a power apparatus, a transmission apparatus, a cooling apparatus, and the like of the vehicle, and the passenger compartment is configured to provide operating space and seating space for the driver and passengers. In a case that the vehicle is a front-wheel drive vehicle, the engine compartment is disposed at the front of the vehicle body, that is, the engine compartment is a front engine compartment. In a case that the vehicle is a rear-wheel drive vehicle, the engine compartment is disposed at the rear of the vehicle body, that is, the engine compartment is a rear engine compartment. In a case that the vehicle is a four-wheel drive vehicle, the engine compartment is divided into a front engine compartment and a rear engine compartment, the front engine compartment is disposed at the front of the vehicle body, and the rear engine compartment is disposed at the rear of the vehicle body. The passenger compartment is disposed between the front and rear of the vehicle body.

The following describes a vehicle body according to the embodiments of this application with reference to the accompanying drawings.

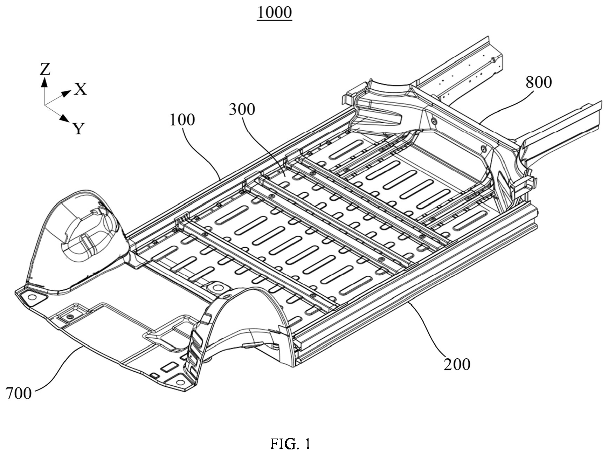

According to a first aspect, referring to FIGs. 1 to 8 together, an embodiment of this application provides a vehicle body 1000 including a main frame 100, a battery 200, a floor panel 300, a first sealing member 400, and a second sealing member 500. The battery 200 includes a battery cell (not shown in the figures) and an outer frame 210 mounted on the main frame 100, where the outer frame 210 has an accommodating cavity 211 configured to accommodate the battery cell. The floor panel 300 covers the outer frame 210 to seal the accommodating cavity 211. The first sealing member 400 is annularly disposed around the accommodating cavity 211, where a portion of the floor panel 300 cooperates with the outer frame 210 to clamp the first sealing member 400 to form a first sealing interface 410. The second sealing member 500 is annularly disposed around the accommodating cavity 211, where another portion of the floor panel 300 cooperates with the outer frame 210 to clamp the second sealing member 500 to form a second sealing interface 510. The first sealing interface 410 and the second sealing interface 510 are disposed at an angle to each other.

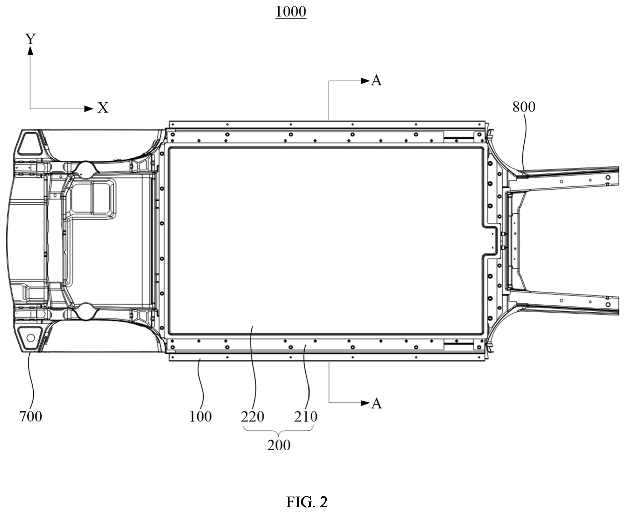

In the following, for ease of description, a direction parallel to an axial direction of the wheels of the vehicle is defined as a width direction of the vehicle body 1000. It should be noted that the axial direction refers to an axial direction of the wheels in a case that the vehicle travels along any straight line, such as the direction Y shown in FIGs. 1 to 8. A direction perpendicular to the axial direction and parallel to the supporting plane of the vehicle is defined as a length direction of the vehicle body 1000. It should be noted that the supporting plane refers to a plane tangent to the wheel surfaces of all wheels of the vehicle on a side facing away from the vehicle body 1000 when the vehicle is in a driving state or a stationary state, such as the direction X shown in FIGs. 1 and 2. A direction perpendicular to the width direction and the length direction is defined as the height direction of the vehicle body 1000, such as the direction Z shown in FIGs. 1 and 3 to 8. The two sides of the vehicle body 1000 along its width direction are the left side and right side of the vehicle body 1000, the two sides of the vehicle body 1000 along its length direction are the front side and rear side of the vehicle body 1000, and the two sides of the vehicle body 1000 along its height direction are the bottom and top of the vehicle body 1000. The bottom is the portion of the vehicle body 1000 facing the supporting plane, and the top is the portion of the vehicle body 1000 facing away from the supporting plane. Similarly, the two sides of the outer frame 210 along the height direction of the vehicle body 1000 are the bottom and top of the outer frame 210, where the bottom is the portion of the outer frame 210 facing the supporting plane, and the top is the portion of the outer frame 210 facing away from the supporting plane.

The main frame 100 is a main supporting component of the vehicle body 1000, which plays a role in supporting and reinforcing the entire vehicle body 1000. The main frame 100 is made of a rigid material, where the rigid material may be, but is not limited to, aluminum, aluminum alloy, iron, stainless steel, or the like. In some embodiments, the main frame 100 includes a front beam body, a rear beam body, and two sill beams. The front beam body, one sill beam, the rear beam body, and the other sill beam are connected end to end to form the main frame 100, where the front beam body and the rear beam body are spaced apart along the length direction of the vehicle body 1000, the front beam body and the rear beam body may have a straight structure and extend along the width direction of the vehicle body 1000, and the front beam body and the rear beam body may also have a bent structure and extend tortuously along the width direction of the vehicle body 1000. One sill beam is disposed on the left side of the vehicle body 1000, and the other sill beam is disposed on the right side of the vehicle body 1000. In the height direction of the vehicle body 1000, the sill beams are located below the doors of the vehicle, the two sill beams may have a straight structure and extend in the length direction of the vehicle body 1000, and the two sill beams may alternatively have a bent structure and extend tortuously along the length direction of the vehicle body 1000. In some embodiments, the front beam body, the rear beam body, and the two sill beams may be an integrally formed component, for example, the front beam body, the rear beam body, and the two sill beams are integrally formed using a die-casting process. In some other embodiments, the front beam body, the rear beam body, and the two sill beams may be separate components, for example, the front beam body, the rear beam body, and the two sill beams are separately formed and then connected to each other to form a whole. In some embodiments, to reduce the weight of the vehicle body 1000, the front beam body, the rear beam body, and the two sill beams may have a hollow structure, that is, cavities are formed inside the front beam body, inside the rear beam body, and inside the two sill beams.

In some embodiments, the vehicle body 1000 may further include a front frame 700 and a rear frame 800, where the front frame 700 is disposed on a front side of the vehicle body 1000 and connected to a side of the front beam body facing away from the rear beam body, and the rear frame 800 is disposed on a rear side of the vehicle body 1000 and connected to a side of the rear beam body facing away from the front beam body.

The battery 200 may be mounted on the main frame 100, for example, the battery 200 is mounted on the bottom of the main frame 100. The battery 200 may be configured to supply power to the vehicle, for example, the battery 200 may serve as an operational power source for the vehicle. The vehicle may further include a controller (not shown in the figures) and a motor (not shown in the figures), where the controller is configured to control the battery 200 to supply power to the motor, for example, to satisfy power needs of start, navigation, and driving of the vehicle. In some embodiments, the battery 200 may be used not only as an operational power source for the vehicle but also as a driving power source for the vehicle, replacing or partially replacing fuel or natural gas to provide traction for the vehicle.

The battery cell is the smallest storage unit for storing electrical energy. There may be a plurality of battery cells, and the plurality of battery cells may be connected in series, parallel, or series-parallel, where being connected in series-parallel means a combination of series and parallel connections of the plurality of battery cells. The plurality of battery cells may be directly connected in series, parallel, or series-parallel, and then an entirety formed by the plurality of battery cells is accommodated in the accommodating cavity 211 of the outer frame 210. Certainly, the battery 200 may be formed by a plurality of battery cells being connected in series, parallel, or series-parallel first to form a battery module and then a plurality of battery modules being connected in series, parallel, or series-parallel to form an entirety which is accommodated in the accommodating cavity 211 of the outer frame 210. The battery 200 may further include other functional components. For example, the battery 200 may further include a busbar component, where the busbar component is configured to implement electrical connection between the plurality of battery cells.

Each battery cell may be a secondary battery or a primary battery, where the secondary battery is a battery cell that can be charged after discharge to activate active materials for continuous use; and the primary battery is a battery cell that, once the electrical energy is exhausted, cannot be charged to activate active materials for continue use. The battery cell may also be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like, but is not limited thereto. The battery cell may be a cylindrical battery cell, a prismatic battery cell, a pouch battery cell, or a battery cell of other shapes. The prismatic battery cell includes a prismatic battery cell, a blade-shaped battery cell, a multi-prismatic battery cell, where the multi-prismatic battery cell is, for example, a hexagonal prismatic battery cell or the like. This is not particularly limited in this application.

The outer frame 210 is configured to provide an installation environment for the battery cells. The outer frame 210 is made of a rigid material, where the rigid material may be, but is not limited to, aluminum, aluminum alloy, iron, stainless steel, or the like. In some embodiments, the outer frame 210 includes two first support beams and two second support beams. One first support beam is disposed on the left side of the vehicle body 1000, and the other first support beam is disposed on the right side of the vehicle body 1000. The first support beam may have a straight structure and extend along the length direction of the vehicle body 1000, or the first support beam may have a bent structure and extend tortuously along the length direction of the vehicle body 1000. The two second support beams are spaced apart along the length direction of the vehicle body 1000. The second support beam may have a straight structure and extend along the width direction of the vehicle body 1000, or the second support beam may have a bent structure and extend tortuously along the width direction of the vehicle body 1000. One first support beam, one second support beam, the other first support beam, and the other second support beam are connected end to end to enclose the accommodating cavity 211. The two first support beams are connected to the two sill beams in a one-to-one correspondence, one second support beam is connected to the front beam body, and the other second support beam is connected to the rear beam body, to mount the outer frame 210 on the main frame 100. The outer frame 210 and the main frame 100 may be connected by, without limitation to, welding, fastening connection, or the like. In some embodiments, the two first support beams and the two second support beams may be an integrally formed component, for example, the two first support beams and the two second support beams are integrally formed using a die-casting process. In some other embodiments, the two first support beams and the two second support beams may be separate components, for example, the two first support beams and the two second support beams are separately formed and then connected to each other to form a whole. In some embodiments, to reduce the weight of the outer frame 210, the first support beam and the second support beam may have a hollow structure, that is, cavities are formed inside the first support beam and inside the second support beam.

In some embodiments, the battery 200 further includes a protective plate 220, where the floor panel 300 covers one side of the outer frame 210 along the height direction of the vehicle body 1000, and the protective plate 220 covers the other side of the outer frame 210 along the height direction of the vehicle body 1000. For example, the floor panel 300 covers the top of the outer frame 210, and the protective plate 220 covers the bottom of the outer frame 210, to isolate the accommodating cavity 211 of the outer frame 210 from the external environment of the battery 200. The protective plate 220 may serve as a heat exchange component of the battery 200 for performing heat exchange operations on the battery cell.

The floor panel 300 is configured to provide installation space for components disposed in the cockpit of the vehicle. For example, the seats of the vehicle are mounted on the floor panel 300, and the floor panel 300 also serves to support the components as well as the driver and passengers. In this embodiment, the floor panel 300 is used as a cover body of the battery 200 to cover the outer frame 210, so as to seal the accommodating cavity 211 of the outer frame 210, thereby achieving an integrated design of the vehicle body 1000. The floor panel 300 may be connected to the outer frame 210 or may not be connected to the outer frame 210. In some embodiments, the floor panel 300 is mounted on the main frame 100, one side of the floor panel 300 along the width direction of the vehicle body 1000 is connected to one sill beam, the other side of the floor panel 300 along the width direction of the vehicle body 1000 is connected to the other sill beam, one side of the floor panel 300 along the length direction of the vehicle body 1000 is connected to the front beam body, and the other side of the floor panel 300 along the length direction of the vehicle body 1000 is connected to the rear beam body. The floor panel 300 and the main frame 100 may be connected by, but without limitation to, welding, fastening connection, bonding, or the like. The floor panel 300 is made of a rigid material, where the rigid material may be, but is not limited to, aluminum, aluminum alloy, iron, stainless steel, or the like. In some embodiments, the floor panel 300 may be an integrally formed component, for example, the floor panel 300 is integrally formed using a die-casting process. In some other embodiments, the floor panel 300 may be a separate component, for example, the floor panel 300 includes a plurality of parts, where the parts are separately formed and then connected to each other to form a whole.

The first sealing member 400 and the second sealing member 500 are configured to seal a gap between the outer frame 210 and the floor panel 300. In some embodiments, the first sealing member 400 and the second sealing member 500 have an annular structure and are annularly disposed around the accommodating cavity 211. It can be understood that the first sealing member 400 and the second sealing member 500 are separately disposed on different parts of the floor panel 300, a portion of the floor panel 300 cooperates with the outer frame 210 to clamp the first sealing member 400 to form the first sealing interface 410, and another portion of the floor panel 300 cooperates with the outer frame 210 to clamp the second sealing member 500 to form the second sealing interface 510. The first sealing member 400 and the second sealing member 500 may be made of a flexible material, where the flexible material may be, but is not limited to, rubber, silicone, or the like.

The first sealing interface 410 refers to an interface at the sealing position between a portion of the floor panel 300 and the outer frame 210. The first sealing interface 410 may be a flat surface or a curved surface, which may be specifically determined based on the shape of the compressed portion of the first sealing member 400. In some embodiments, the first sealing interface 410 is a flat surface, and the first sealing interface 410 is perpendicular to a direction of the pressing force acting on the first sealing member 400 by the floor panel 300 and the outer frame 210 together. When the first sealing member 400 is in a clamped state, foreign objects cannot enter the accommodating cavity 211 of the outer frame 210 along a direction parallel to the first sealing interface 410.

The second sealing interface 510 refers to an interface at the sealing position between another portion of the floor panel 300 and the outer frame 210. The second sealing interface 510 may be a flat surface or a curved surface, which may be specifically determined based on the shape of the compressed portion of the second sealing member 500. In some embodiments, the second sealing interface 510 is a flat surface, and the second sealing interface 510 is perpendicular to a direction of the pressing force acting on the second sealing member 500 by the floor panel 300 and the outer frame 210 together. When the second sealing member 500 is in a clamped state, foreign objects cannot enter the accommodating cavity 211 of the outer frame 210 along a direction parallel to the second sealing interface 510.

The first sealing interface 410 and the second sealing interface 510 are disposed at an angle to each other, that is, the first sealing interface 410 and the second sealing interface 510 are not parallel to each other, and the sealing direction of the first sealing interface 410 is different from the sealing direction of the second sealing interface 510. In other words, at least two sealing structures are provided between the floor panel 300 and the outer frame 210, and the sealing directions of the at least two sealing structures are different.

In the vehicle body 1000 according to the embodiments of this application, a portion of the floor panel 300 cooperates with the outer frame 210 to clamp the first sealing member 400 to form the first sealing interface 410, another portion of the floor panel 300 cooperates with the outer frame 210 to clamp the second sealing member 500 to form the second sealing interface 510, and the first sealing interface 410 and the second sealing interface 510 are disposed at an angle to each other, that is, the sealing direction of the first sealing interface 410 is different from the sealing direction of the second sealing interface 510. In this way, in a case that the vehicle body 1000 vibrates along a direction perpendicular to the first sealing interface 410, the gap between the outer frame 210 and the floor panel 300 can be sealed relying on the second sealing member 500; in a case that the vehicle body 1000 vibrates along a direction perpendicular to the second sealing interface 510, the gap between the outer frame 210 and the floor panel 300 can be sealed relying on the first sealing member 400. This effectively reduces the risk of sealing failure between the outer frame 210 and the floor panel 300 caused by vibration of the vehicle body 1000, thereby effectively improving the sealing performance of the battery 200.

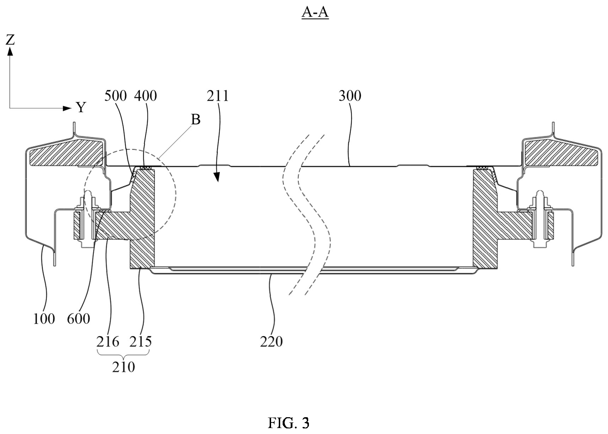

In some embodiments of this application, referring to FIGs. 3 to 8 together, the floor panel 300 includes a plate body 310 covering the outer frame 210 and a bent portion 320 annularly disposed around the plate body 310, where the outer frame 210 has a first pressing surface 212 and a second pressing surface 213 disposed at an angle to each other, the plate body 310 cooperates with the first pressing surface 212 to clamp the first sealing member 400 to form the first sealing interface 410, and the bent portion 320 cooperates with the second pressing surface 213 to clamp the second sealing member 500 to form the second sealing interface 510.

The plate body 310 is a main part of the floor panel 300, and configured to seal the accommodating cavity 211 of the outer frame 210. The plate body 310 may have a flat structure or a tortuous structure. The bent portion 320 is a part formed by bending the plate body 310 toward a preset direction, that is, the bent portion 320 and the plate body 310 are disposed at an angle to each other. In some embodiments, the bent portion 320 and the plate body 310 may be an integrally formed component, for example, the bent portion 320 and the plate body 310 are integrally formed using a stamping process. In some other embodiments, the bent portion 320 and the plate body 310 are separately formed and then connected to each other to form a whole. The bent portion 320 and the plate body 310 may be connected by, but without limitation to, welding, fastening connection, bonding, or the like.

The first pressing surface 212 is a part configured to support the first sealing member 400, and the first pressing surface 212 may be a flat surface. In a case that the floor panel 300 covers the outer frame 210, the first pressing surface 212 is disposed opposite the plate body 310, and the first pressing surface 212 cooperates with the plate body 310 to clamp the first sealing member 400 to form the first sealing interface 410. The second pressing surface 213 is a part configured to support the second sealing member 500, and the second pressing surface 213 may be a flat surface. In a case that the floor panel 300 covers the outer frame 210, the second pressing surface 213 is disposed opposite the bent portion 320, and the second pressing surface 213 cooperates with the bent portion 320 to clamp the second sealing member 500 to form the second sealing interface 510. The first pressing surface 212 and the second pressing surface 213 are disposed at an angle to each other, that is, the first pressing surface 212 and the second pressing surface 213 are not parallel to each other, so that the first sealing interface 410 and the second sealing interface 510 that are not parallel to each other can be formed between the outer frame 210 and the floor panel 300.

In some embodiments, the first sealing member 400 includes two first sealing bodies spaced apart along the width direction of the vehicle body 1000, and two second sealing bodies spaced apart along the length direction of the vehicle body 1000; and the second sealing member 500 includes two third sealing bodies spaced apart along the width direction of the vehicle body 1000, and two fourth sealing bodies spaced apart along the length direction of the vehicle body 1000. In a case that the outer frame 210 includes two first support beams and two second support beams, where the two first support beams and the two second support beams are each provided with the first pressing surface 212 and the second pressing surface 213. The first pressing surface 212 of one first support beam cooperates with the plate body 310 to clamp one first sealing body, the first pressing surface 212 of the other first support beam cooperates with the plate body 310 to clamp the other first sealing body, the first pressing surface 212 of one second support beam cooperates with the plate body 310 to clamp one second sealing body, and the first pressing surface 212 of the other second support beam cooperates with the plate body 310 to clamp the other second sealing body. Similarly, the second pressing surface 213 of one first support beam cooperates with the bent portion 320 to clamp one third sealing body, the second pressing surface 213 of the other first support beam cooperates with the bent portion 320 to clamp the other third sealing body, the second pressing surface 213 of one second support beam cooperates with the bent portion 320 to clamp one fourth sealing body, and the second pressing surface 213 of the other second support beam cooperates with the bent portion 320 to clamp the other fourth sealing body.

With the above technical solution, it is convenient to form the first sealing interface 410 and the second sealing interface 510 between the outer frame 210 and the floor panel 300.

In some embodiments of this application, referring to FIGs. 3 to 8 together, the first pressing surface 212 is perpendicular to a height direction of the vehicle body 1000.

During the assembly process of the vehicle body 1000, the floor panel 300 can be placed over the outer frame 210 along the height direction of the vehicle body 1000, so that the plate body 310 cooperates with the outer frame 210 along the height direction of the vehicle body 1000 to clamp the first sealing member 400. The compression amount of the first sealing member 400 can be adjusted by adjusting the spacing between the floor panel 300 and the outer frame 210 along the height direction of the vehicle body 1000.

The above technical solution not only facilitates assembly of the outer frame 210 and the floor panel 300, but also makes it easier to control the compression amount of the first sealing member 400. In a case that the vehicle body 1000 does not vibrate along the height direction, the first sealing member 400 can effectively seal the gap between the outer frame 210 and the plate body 310, effectively improving the sealing performance of the battery 200. In a case that the vehicle body 1000 vibrates along the height direction, the gap between the outer frame 210 and the floor panel 300 can be sealed relying on the second sealing member 500, effectively reducing the risk of sealing failure between the outer frame 210 and the floor panel 300 caused by vibration of the vehicle body 1000. This further improves the sealing performance of the battery 200.

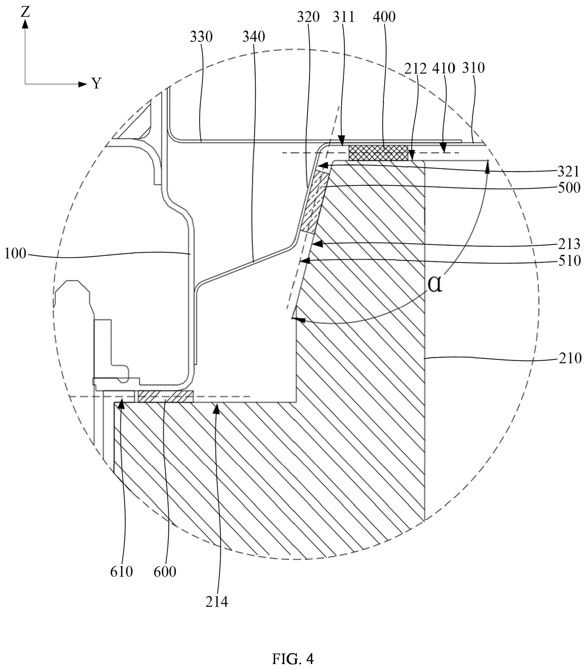

In some embodiments of this application, referring to FIGs. 3 and 4 together, the angle α formed by the first pressing surface 212 and the second pressing surface 213 is an obtuse angle.

In some embodiments, the first pressing surface 212 is formed on a top of the outer frame 210, the second pressing surface 213 is formed on a side of the outer frame 210 facing away from the accommodating cavity 211, the second pressing surface 213 is connected to the first pressing surface 212, and the second pressing surface 213 is inclined from the first pressing surface 212 in a direction leaving the accommodating cavity 211 of the outer frame 210, so that the angle α formed by the first pressing surface 212 and the second pressing surface 213 is an obtuse angle.

In some other embodiments, the first pressing surface 212 is formed on a top of the outer frame 210, the second pressing surface 213 is formed on a side of the outer frame 210 facing the accommodating cavity 211, the second pressing surface 213 is connected to the first pressing surface 212, and the second pressing surface 213 is inclined from the first pressing surface 212 in a direction approaching the accommodating cavity 211 of the outer frame 210, so that the angle α formed by the first pressing surface 212 and the second pressing surface 213 is an obtuse angle.

During the assembly process of the vehicle body 1000, the floor panel 300 can be placed over the outer frame 210 along the height direction of the vehicle body 1000, so that the plate body 310 cooperates with the outer frame 210 along the height direction of the vehicle body 1000 to clamp the first sealing member 400, and the bent portion 320 follows the inclination direction of the second pressing surface 213 to cooperate with the second pressing surface 213 to clamp the second sealing member 500, thereby completing the assembly operation of the outer frame 210 and the floor panel 300.

With the above technical solution, it is convenient to place the floor panel 300 over the outer frame 210 and make the bent portion 320 cooperate with the second pressing surface 213 to clamp the second sealing member 500.

In some embodiments of this application, referring to FIG. 4, the angle α formed by the first pressing surface 212 and the second pressing surface 213 is 95°-120°.

The angle α formed by the first pressing surface 212 and the second pressing surface 213 may be determined according to actual application needs, and specifically, may be 95°, 100°, 105°, 110°, 115°, 120°, or the like.

The above technical solution not only facilitates placement of the floor panel 300 over the outer frame 210, but also mitigates the change in the compression amount of the second sealing member 500 in a case that the vehicle body 1000 vibrates along the height direction, thereby reducing the risk of sealing failure between the outer frame 210 and the floor panel 300 caused by vibration of the vehicle body 1000.

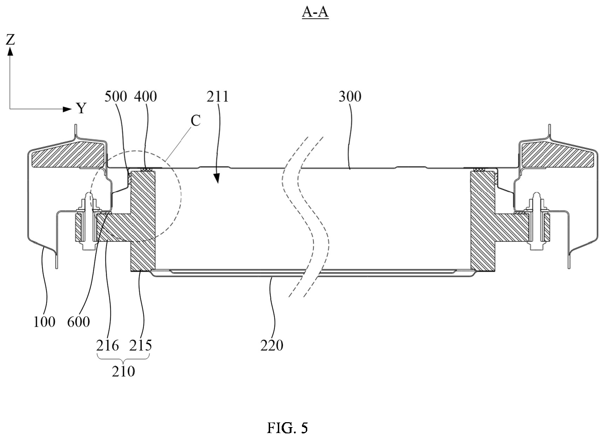

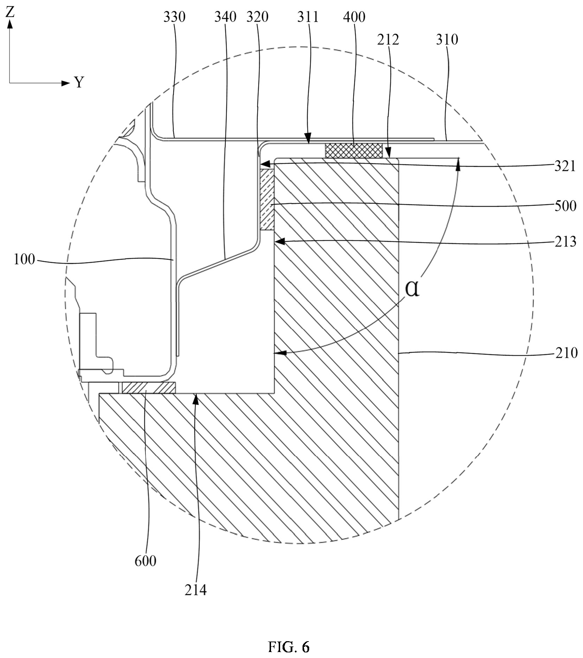

In some embodiments of this application, referring to FIGs. 5 and 6 together, the angle α formed by the first pressing surface 212 and the second pressing surface 213 is a right angle.

In other words, the first pressing surface 212 is perpendicular to the height direction of the vehicle body 1000, and the second pressing surface 213 is parallel to the height direction of the vehicle body 1000.

With the above technical solution, in a case that the vehicle body 1000 vibrates along the height direction, the compression amount of the first sealing member 400 changes significantly, while the compression amount of the second sealing member 500 hardly changes. Therefore, the gap between the outer frame 210 and the floor panel 300 can be sealed relying on the second sealing member 500. In a case that the vehicle body 1000 vibrates along a direction perpendicular to its height direction, the compression amount of the second sealing member 500 changes significantly, while the compression amount of the first sealing member 400 hardly changes. Therefore, the gap between the outer frame 210 and the floor panel 300 can be sealed relying on the first sealing member 400. This effectively reduces the risk of sealing failure between the outer frame 210 and the floor panel 300 caused by vibration of the vehicle body 1000, thereby effectively improving the sealing performance of the battery 200.

In some embodiments of this application, referring to FIGs. 4, 6, and 8 together, the plate body 310 has a third pressing surface 311 disposed opposite the first pressing surface 212, where the third pressing surface 311 is parallel to the first pressing surface 212 and cooperates with the first pressing surface 212 to clamp the first sealing member 400.

The third pressing surface 311 is a part configured to press the first sealing member 400. In a case that the floor panel 300 covers the outer frame 210, the first pressing surface 212 and the third pressing surface 311 are disposed opposite each other, and the first pressing surface 212 cooperates with the third pressing surface 311 to clamp the first sealing member 400 to form the first sealing interface 410.

In some embodiments, the first pressing surface 212 and the third pressing surface 311 are flat surfaces, and the first pressing surface 212 and the third pressing surface 311 are parallel to each other. In a case that the first pressing surface 212 cooperates with the third pressing surface 311 to clamp the first sealing member 400, the direction of the pressing force acting on the first sealing member 400 by the first pressing surface 212 is opposite to the direction of the pressing force acting on the first sealing member 400 by the third pressing surface 311, so that the two pressing forces can be superimposed on the first sealing member 400, thereby effectively increasing the compression amount of the first sealing member 400.

With the above technical solution, the pressing force acting on the first sealing member 400 by the plate body 310 and the outer frame 210 together is effectively increased, thereby effectively increasing the compression amount of the first sealing member 400. This further reduces the risk of sealing failure between the outer frame 210 and the floor panel 300 caused by vibration of the vehicle body 1000, thereby further improving the sealing performance of the battery 200.

In some other embodiments of this application, referring to FIGs. 4, 6, and 8 together, the bent portion 320 has a fourth pressing surface 321 disposed opposite the second pressing surface 213, where the fourth pressing surface 321 is parallel to the second pressing surface 213 and cooperates with the second pressing surface 213 to clamp the second sealing member 500.

The fourth pressing surface 321 is a part configured to press the second sealing member 500. In a case that the floor panel 300 covers the outer frame 210, the second pressing surface 213 and the fourth pressing surface 321 are disposed opposite each other, and the second pressing surface 213 cooperates with the fourth pressing surface 321 to clamp the second sealing member 500 to form the second sealing interface 510.

In some embodiments, the second pressing surface 213 and the fourth pressing surface 321 are flat surfaces, and the second pressing surface 213 and the fourth pressing surface 321 are parallel to each other. In a case that the second pressing surface 213 cooperates with the fourth pressing surface 321 to clamp the second sealing member 500, the direction of the pressing force acting on the second sealing member 500 by the second pressing surface 213 is opposite to the direction of the pressing force acting on the second sealing member 500 by the fourth pressing surface 321, so that the two pressing forces can be superimposed on the second sealing member 500, thereby effectively increasing the compression amount of the second sealing member 500.

With the above technical solution, the pressing force acting on the second sealing member 500 by the bent portion 320 and the outer frame 210 together is effectively increased, thereby effectively increasing the compression amount of the second sealing member 500. This further reduces the risk of sealing failure between the outer frame 210 and the floor panel 300 caused by vibration of the vehicle body 1000, thereby further improving the sealing performance of the battery 200.

In still some embodiments of this application, referring to FIGs. 4, 6, and 8 together, the plate body 310 has a third pressing surface 311 disposed opposite the first pressing surface 212, where the third pressing surface 311 is parallel to the first pressing surface 212 and cooperates with the first pressing surface 212 to clamp the first sealing member 400; and the bent portion 320 has a fourth pressing surface 321 disposed opposite the second pressing surface 213, where the fourth pressing surface 321 is parallel to the second pressing surface 213 and cooperates with the second pressing surface 213 to clamp the second sealing member 500.

With the above technical solution, the pressing force acting on the first sealing member 400 by the plate body 310 and the outer frame 210 together and the pressing force acting on the second sealing member 500 by the bent portion 320 and the outer frame 210 together are effectively increased, thereby effectively increasing the compression amount of the first sealing member 400 and the compression amount of the second sealing member 500. This further reduces the risk of sealing failure between the outer frame 210 and the floor panel 300 caused by vibration of the vehicle body 1000, thereby further improving the sealing performance of the battery 200.

In some embodiments of this application, referring to FIGs. 4, 6, and 8 together, the floor panel 300 further includes a first connecting portion 330, where the first connecting portion 330 is connected between the plate body 310 and the main frame 100.

The first connecting portion 330 is a part configured to connect the plate body 310 and the main frame 100. In some embodiments, the first connecting portion 330 and the plate body 310 are an integrally formed component, for example, the first connecting portion 330 and the plate body 310 are integrally formed using a stamping process. In some other embodiments, the first connecting portion 330 and the plate body 310 are separately formed and then connected to each other to form a whole. The first connecting portion 330 and the plate body 310 may be connected by, but without limitation to, welding, fastening connection, bonding, or the like. The first connecting portion 330 and the main frame 100 may be connected by, but without limitation to, welding, fastening connection, bonding, or the like.

With the above technical solution, under the supporting action of the main frame 100, the pressing force acting on the first sealing member 400 by the plate body 310 is effectively increased, thereby effectively increasing the compression amount of the first sealing member 400. This further reduces the risk of sealing failure between the outer frame 210 and the floor panel 300 caused by vibration of the vehicle body 1000, thereby further improving the sealing performance of the battery 200.

In some embodiments of this application, the first connecting portion 330 is annularly disposed around the plate body 310, where an inner annular side of the first connecting portion 330 is connected to the plate body 310, and an outer annular side of the first connecting portion 330 is connected to the main frame 100.

In some embodiments, the first connecting portion 330 has an annular plate structure, the first connecting portion 330 covers a gap between the plate body 310 and the main frame 100, an inner annular side of the first connecting portion 330 is connected to the plate body 310, and an outer annular side of the first connecting portion 330 is connected to the main frame 100, to seal the gap between the plate body 310 and the main frame 100.

With the above technical solution, the gap between the plate body 310 and the main frame 100 is effectively sealed, thereby effectively isolating the accommodating cavity 211 of the outer frame 210 from the external environment of the main frame 100. This further improves the sealing performance of the battery 200.

In some embodiments of this application, referring to FIGs. 4, 6, and 8 together, the floor panel 300 further includes a second connecting portion 340, where the second connecting portion 340 is connected between the bent portion 320 and the main frame 100.

The second connecting portion 340 is a part configured to connect the bent portion 320 and the main frame 100. In some embodiments, the second connecting portion 340 and the bent portion 320 are an integrally formed component, for example, the second connecting portion 340 and the bent portion 320 are integrally formed using a stamping process. In some other embodiments, the second connecting portion 340 and the bent portion 320 are separately formed and then connected to each other to form a whole. The second connecting portion 340 and the bent portion 320 may be connected by, but without limitation to, welding, fastening connection, bonding, or the like. The second connecting portion 340 and the main frame 100 may be connected by, but without limitation to, welding, fastening connection, bonding, or the like.

With the above technical solution, under the supporting action of the main frame 100, the pressing force acting on the second sealing member 500 by the bent portion 320 is effectively increased, thereby effectively increasing the compression amount of the second sealing member 500. This further reduces the risk of sealing failure between the outer frame 210 and the floor panel 300 caused by vibration of the vehicle body 1000, thereby further improving the sealing performance of the battery 200.

In some embodiments of this application, the second connecting portion 340 is annularly disposed around the bent portion 320, where an inner annular side of the second connecting portion 340 is connected to the bent portion 320, and an outer annular side of the second connecting portion 340 is connected to the main frame 100.

In some embodiments, the second connecting portion 340 has an annular plate structure, the second connecting portion 340 covers a gap between the bent portion 320 and the main frame 100, an inner annular side of the second connecting portion 340 is connected to the bent portion 320, and an outer annular side of the second connecting portion 340 is connected to the main frame 100, to seal the gap between the bent portion 320 and the main frame 100.

With the above technical solution, the gap between the bent portion 320 and the main frame 100 is effectively sealed, thereby effectively isolating the accommodating cavity 211 of the outer frame 210 from the external environment of the outer frame 210. This further improves the sealing performance of the battery 200.

In some embodiments of this application, referring to FIGs. 3 to 8 together, the first sealing member 400 is disposed on a top of the outer frame 210.

In other words, the first pressing surface 212 is formed on the top of the outer frame 210, and the first sealing member 400 is disposed on the first pressing surface 212.

With the above technical solution, the internal space of the accommodating cavity 211 of the outer frame 210 occupied by the sealing structure between the outer frame 210 and the floor panel 300 is effectively reduced, effectively improving the space utilization of the accommodating cavity 211 of the outer frame 210. This effectively improves the volumetric energy density of the battery 200.

In some other embodiments of this application, referring to FIGs. 3 to 8 together, the second sealing member 500 is disposed on a side of the outer frame 210 facing away from the accommodating cavity 211.

In other words, the second pressing surface 213 is formed on a side of the outer frame 210 facing away from the accommodating cavity 211, and the second sealing member 500 is disposed on the second pressing surface 213.

With the above technical solution, the internal space of the accommodating cavity 211 of the outer frame 210 occupied by the sealing structure between the outer frame 210 and the floor panel 300 is effectively reduced, effectively improving the space utilization of the accommodating cavity 211 of the outer frame 210. This effectively improves the volumetric energy density of the battery 200.

In still some embodiments of this application, referring to FIGs. 3 to 8 together, the first sealing member 400 is disposed on a top of the outer frame 210, and the second sealing member 500 is disposed on a side of the outer frame 210 facing away from the accommodating cavity 211.

In a case that the floor panel 300 covers the outer frame 210, the plate body 310 is located at the top of the outer frame 210, and the bent portion 320 is located on a side of the outer frame 210 facing away from the accommodating cavity 211. In other words, the bent portion 320 is formed by bending the plate body 310 in a direction approaching the supporting plane.

With the above technical solution, the sealing structure between the outer frame 210 and the floor panel 300 does not need to occupy the internal space of the accommodating cavity 211 of the outer frame 210, effectively improving the space utilization of the accommodating cavity 211 of the outer frame 210. This effectively improves the volumetric energy density of the battery 200.

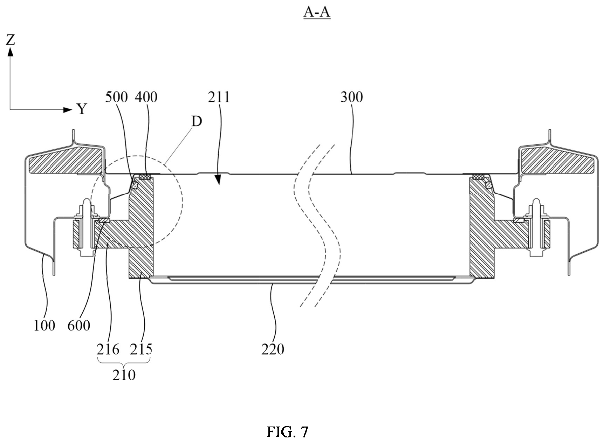

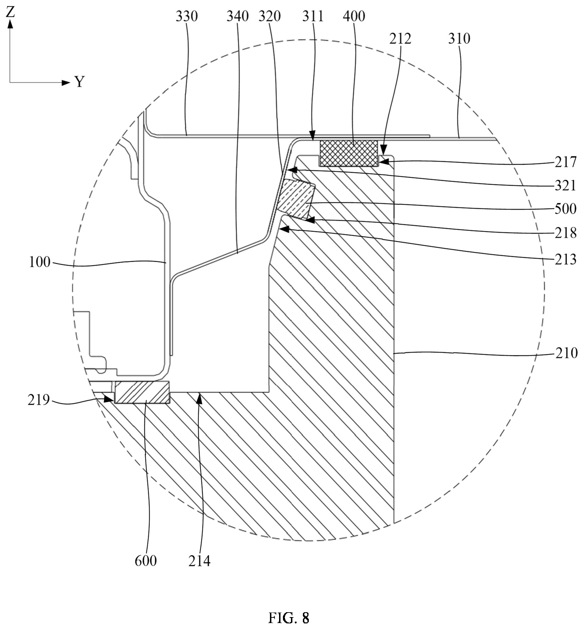

In some embodiments of this application, referring to FIGs. 7 and 8 together, the outer frame 210 or the floor panel 300 is provided with a first limiting groove 217, where at least a portion of the first sealing member 400 is accommodated in the first limiting groove 217.

In some embodiments, referring to FIG. 8, the outer frame 210 is provided with a first limiting groove 217, where the first limiting groove 217 may be formed by recessing the first pressing surface 212 of the outer frame 210 in a direction leaving the plate body 310 of the floor panel 300.

In some other embodiments, the floor panel 300 is provided with the first limiting groove 217, where the first limiting groove 217 may be formed by recessing a side of the plate body 310 of the floor panel 300 facing the outer frame 210 in a direction leaving the outer frame 210.

The first limiting groove 217 may have an annular structure and be annularly disposed around the accommodating cavity 211 of the outer frame 210, where a portion of the first sealing member 400 is accommodated in the first limiting groove 217, and another portion of the first sealing member 400 protrudes outward from the first limiting groove 217.

With the above technical solution, the position of the first sealing member 400 is effectively limited, mitigating the displacement of the first sealing member 400 in a case that the vehicle body 1000 vibrates. This further reduces the risk of sealing failure between the outer frame 210 and the floor panel 300 caused by vibration of the vehicle body 1000, thereby further improving the sealing performance of the battery 200.

In some embodiments of this application, referring to FIGs. 7 and 8 together, the outer frame 210 or the floor panel 300 is provided with a second limiting groove 218, where at least a portion of the second sealing member 500 is accommodated in the second limiting groove 218.

In some embodiments, referring to FIG. 8, the outer frame 210 is provided with the second limiting groove 218, where the second limiting groove 218 may be formed by recessing the second pressing surface 213 of the outer frame 210 in a direction leaving the bent portion 320 of the floor panel 300.

In some other embodiments, the floor panel 300 is provided with the second limiting groove 218, where the second limiting groove 218 may be formed by recessing a side of the bent portion 320 of the floor panel 300 facing the outer frame 210 in a direction leaving the outer frame 210.

The second limiting groove 218 may have an annular structure and be annularly disposed around the accommodating cavity 211 of the outer frame 210, where a portion of the second sealing member 500 is accommodated in the second limiting groove 218, and another portion of the second sealing member 500 protrudes outward from the second limiting groove 218.

With the above technical solution, the position of the second sealing member 500 is effectively limited, mitigating the displacement of the second sealing member 500 in a case that the vehicle body 1000 vibrates. This further reduces the risk of sealing failure between the outer frame 210 and the floor panel 300 caused by vibration of the vehicle body 1000, thereby further improving the sealing performance of the battery 200.

In some embodiments of this application, referring to FIGs. 3 to 8 together, the vehicle body 1000 further includes a third sealing member 600 annularly disposed around the accommodating cavity 211, where the main frame 100 cooperates with the outer frame 210 to clamp the third sealing member 600 to form a third sealing interface 610.

The third sealing member 600 is configured to seal the gap between the outer frame 210 and the main frame 100. In some embodiments, the third sealing member 600 has an annular structure and is annularly disposed around the accommodating cavity 211. It can be understood that the first sealing member 400, the second sealing member 500, and the third sealing member 600 are separately disposed on different parts of the outer frame 210, a portion of the outer frame 210 cooperates with the floor panel 300 to clamp the first sealing member 400 to form the first sealing interface 410, another portion of the outer frame 210 cooperates with the floor panel 300 to clamp the second sealing member 500 to form the second sealing interface 510, and still another portion of the outer frame 210 cooperates with the main frame 100 to clamp the third sealing member 600 to form the third sealing interface 610. The third sealing member 600 may be made of a flexible material, where the flexible material may be, but is not limited to, rubber, silicone, or the like.

The third sealing interface 610 refers to an interface at the sealing position between the outer frame 210 and the main frame 100. The third sealing interface 610 may be a flat surface or a curved surface, which may be specifically determined based on the shape of the compressed portion of the third sealing member 600. In some embodiments, the third sealing interface 610 is a flat surface, and the third sealing interface 610 is perpendicular to a direction of the pressing force acting on the third sealing member 600 by the outer frame 210 and the main frame 100 together. When the third sealing member 600 is in a clamped state, foreign objects cannot enter the space between the outer frame 210 and the main frame 100 along a direction parallel to the third sealing interface 610.

In some embodiments, the third sealing member 600 includes two fifth sealing bodies spaced apart along the width direction of the vehicle body 1000, and two sixth sealing bodies spaced apart along the length direction of the vehicle body 1000. In a case that the outer frame 210 includes two first support beams and two second support beams and the main frame 100 includes a front beam body, a rear beam body, and two sill beams, one first support beam cooperates with one sill beam to clamp one fifth sealing body, the other first support beam cooperates with the other sill beam to clamp the other fifth sealing body, one second support beam cooperates with the front beam body to clamp one sixth sealing body, and the other second support beam cooperates with the rear beam body to clamp the other sixth sealing body.

With the above technical solution, the gap between the outer frame 210 and the main frame 100 is effectively sealed, thereby effectively isolating the accommodating cavity 211 of the outer frame 210 from the external environment of the main frame 100. This further improves the sealing performance of the battery 200.

In some embodiments of this application, referring to FIG. 4, the third sealing interface 610 is parallel to the first sealing interface 410.

The third sealing interface 610 being parallel to the first sealing interface 410 means that the sealing direction of the sealing structure formed between the outer frame 210 and the plate body 310 is the same as the sealing direction of the sealing structure formed between the outer frame 210 and the main frame 100.

In some embodiments, the outer frame 210 has a first pressing surface 212 and a fifth pressing surface 214, where the first sealing member 400 is disposed on the first pressing surface 212, the third sealing member 600 is disposed on the fifth pressing surface 214, and the first pressing surface 212 and the fifth pressing surface 214 are perpendicular to the height direction of the vehicle body 1000.

With the above technical solution, in a case that the vehicle body 1000 vibrates along a direction perpendicular to the first sealing interface 410, the gap between the outer frame 210 and the floor panel 300 can be sealed relying on the second sealing member 500. In a case that the vehicle body 1000 vibrates along a direction perpendicular to the second sealing interface 510, the gap between the outer frame 210 and the floor panel 300 can be sealed relying on the first sealing member 400, and the gap between the outer frame 210 and the main frame 100 can also be sealed relying on the third sealing member 600. This further reduces the risk of sealing failure between the outer frame 210 and the floor panel 300 and between the outer frame 210 and the main frame 100 caused by vibration of the vehicle body 1000, thereby further improving the sealing performance of the battery 200.

In some embodiments of this application, referring to FIGs. 7 and 8 together, the outer frame 210 or the main frame 100 is provided with a third limiting groove 219, where at least a portion of the third sealing member 600 is accommodated in the third limiting groove 219.

In some embodiments, referring to FIG. 8, the outer frame 210 is provided with the third limiting groove 219, where the third limiting groove 219 may be formed by recessing a portion of the outer frame 210 facing the main frame 100 in a direction leaving the main frame 100.

In some other embodiments, the main frame 100 is provided with the third limiting groove 219, where the third limiting groove 219 may be formed by recessing a portion of the main frame 100 facing the outer frame 210 in a direction leaving the outer frame 210.

The third limiting groove 219 may have an annular structure and be annularly disposed around the accommodating cavity 211 of the outer frame 210, where a portion of the third sealing member 600 is accommodated in the third limiting groove 219, and another portion of the third sealing member 600 protrudes outward from the third limiting groove 219.

With the above technical solution, the position of the third sealing member 600 is effectively limited, mitigating the displacement of the third sealing member 600 in a case that the vehicle body 1000 vibrates. This effectively reduces the risk of sealing failure between the outer frame 210 and the main frame 100 caused by vibration of the vehicle body 1000, thereby further improving the sealing performance of the battery 200.

In some embodiments of this application, referring to FIGs. 3 to 8 together, the outer frame 210 includes a frame body 215 and a mounting seat 216 connected to the frame body 215, where the frame body 215 is provided with the accommodating cavity 211, the mounting seat 216 is mounted on the main frame 100, a portion of the floor panel 300 cooperates with the frame body 215 to clamp the first sealing member 400 to form the first sealing interface 410, another portion of the floor panel 300 cooperates with the frame body 215 to clamp the second sealing member 500 to form the second sealing interface 510, and the main frame 100 cooperates with the mounting seat 216 to clamp the third sealing member 600 to form the third sealing interface 610.

The frame body 215 is a main part of the outer frame 210, and the mounting seat 216 is a part configured to connect the frame body 215 and the main frame 100. In some embodiments, the mounting seat 216 is connected to a side of the frame body 215 facing away from the accommodating cavity 211, and the mounting seat 216 has an annular structure and is annularly disposed around the frame body 215. In some embodiments, the frame body 215 and the mounting seat 216 may be an integrally formed component, for example, the frame body 215 and the mounting seat 216 are integrally formed using a die-casting process. In some other embodiments, the frame body 215 and the mounting seat 216 are separately formed and then connected to each other to form a whole. The frame body 215 and the mounting seat 216 may be connected by, but without limitation to, welding, fastening connection, bonding, or the like. The mounting seat 216 and the main frame 100 may be connected by, but without limitation to, welding, fastening connection, bonding, or the like.

The above technical solution not only facilitates formation of the first sealing interface 410 and the second sealing interface 510 between the outer frame 210 and the floor panel 300, but also facilitates formation of the third sealing interface 610 between the outer frame 210 and the main frame 100.

According to a second aspect, an embodiment of this application provides a vehicle including the vehicle body 1000 according to any one of the foregoing embodiments.

The vehicle according to the embodiments of this application adopts the vehicle body 1000 according to any one of the foregoing embodiments, effectively improving the safety performance of the vehicle.

The foregoing descriptions are merely preferred embodiments of this application and are not intended to limit this application. Any modifications, equivalent replacements, and improvements made without departing from the spirit and principle of this application shall fall within the protection scope of this application.

## Claims

1. A vehicle body, **characterized in that** the vehicle body comprises:
a main frame;
a battery, comprising a battery cell and an outer frame mounted on the main frame, wherein the outer frame has an accommodating cavity configured to accommodate the battery cell;
a floor panel covering the outer frame to seal the accommodating cavity;
a first sealing member annularly disposed around the accommodating cavity, wherein a portion of the floor panel cooperates with the outer frame to clamp the first sealing member to form a first sealing interface; and
a second sealing member annularly disposed around the accommodating cavity, wherein another portion of the floor panel cooperates with the outer frame to clamp the second sealing member to form a second sealing interface;
wherein the first sealing interface and the second sealing interface are disposed at an angle to each other.

2. The vehicle body according to claim 1, **characterized in that**: the floor panel comprises a plate body covering the outer frame and a bent portion annularly disposed around the plate body, wherein the outer frame has a first pressing surface and a second pressing surface disposed at an angle to each other, the plate body cooperates with the first pressing surface to clamp the first sealing member to form the first sealing interface, and the bent portion cooperates with the second pressing surface to clamp the second sealing member to form the second sealing interface.

3. The vehicle body according to claim 2, **characterized in that**: the first pressing surface is perpendicular to a height direction of the vehicle body.

4. The vehicle body according to claim 3, **characterized in that**: the angle formed by the first pressing surface and the second pressing surface is an obtuse angle.

5. The vehicle body according to claim 4, **characterized in that**: the angle formed by the first pressing surface and the second pressing surface is 95°-120°.

6. The vehicle body according to claim 3, **characterized in that**: the angle formed by the first pressing surface and the second pressing surface is a right angle.

7. The vehicle body according to any one of claims 2 to 6, **characterized in that**:
the plate body has a third pressing surface disposed opposite the first pressing surface, wherein the third pressing surface is parallel to the first pressing surface and cooperates with the first pressing surface to clamp the first sealing member; and/or
the bent portion has a fourth pressing surface disposed opposite the second pressing surface, wherein the fourth pressing surface is parallel to the second pressing surface and cooperates with the second pressing surface to clamp the second sealing member.

8. The vehicle body according to any one of claims 2 to 7, **characterized in that**: the floor panel further comprises a first connecting portion, wherein the first connecting portion is connected between the plate body and the main frame.

9. The vehicle body according to claim 8, **characterized in that**: the first connecting portion is annularly disposed around the plate body, wherein an inner annular side of the first connecting portion is connected to the plate body, and an outer annular side of the first connecting portion is connected to the main frame.

10. The vehicle body according to any one of claims 2 to 9, **characterized in that**: the floor panel further comprises a second connecting portion, wherein the second connecting portion is connected between the bent portion and the main frame.

11. The vehicle body according to claim 10, **characterized in that**: the second connecting portion is annularly disposed around the bent portion, wherein an inner annular side of the second connecting portion is connected to the bent portion, and an outer annular side of the second connecting portion is connected to the main frame.

12. The vehicle body according to any one of claims 1 to 11, **characterized in that**:
the first sealing member is disposed on a top of the outer frame; and/or
the second sealing member is disposed on a side of the outer frame facing away from the accommodating cavity.

13. The vehicle body according to any one of claims 1 to 12, **characterized in that**: the outer frame or the floor panel is provided with a first limiting groove, wherein at least a portion of the first sealing member is accommodated in the first limiting groove.

14. The vehicle body according to any one of claims 1 to 13, **characterized in that**: the outer frame or the floor panel is provided with a second limiting groove, wherein at least a portion of the second sealing member is accommodated in the second limiting groove.

15. The vehicle body according to any one of claims 1 to 14, **characterized in that**: the vehicle body further comprises a third sealing member annularly disposed around the accommodating cavity, wherein the main frame cooperates with the outer frame to clamp the third sealing member to form a third sealing interface.

16. The vehicle body according to claim 15, **characterized in that**: the third sealing interface is parallel to the first sealing interface.

17. The vehicle body according to claim 15 or 16, **characterized in that**: the outer frame or the main frame is provided with a third limiting groove, wherein at least a portion of the third sealing member is accommodated in the third limiting groove.

18. The vehicle body according to any one of claims 15 to 17, **characterized in that**: the outer frame comprises a frame body and a mounting seat connected to the frame body, wherein the frame body is provided with the accommodating cavity, the mounting seat is mounted on the main frame, a portion of the floor panel cooperates with the frame body to clamp the first sealing member to form the first sealing interface, another portion of the floor panel cooperates with the frame body to clamp the second sealing member to form the second sealing interface, and the main frame cooperates with the mounting seat to clamp the third sealing member to form the third sealing interface.

19. A vehicle, **characterized in that**: the vehicle comprises the vehicle body according to any one of claims 1 to 18.
